# EUROPÄISCHE PATENTSCHRIFT

(11) **EP 2 507 526 B1**
(45) Veröffentlichungstag und Bekanntmachung des Hinweises auf die Patenterteilung: **15.01.2014**
(21) Anmeldenummer: 10781518.5
(22) Anmeldetag: 25.11.2010
(51) Int. Cl.: F16C 19/54, F16C 35/04, F16C 33/58, F16C 35/067

(54) **LAGERANORDNUNG**
BEARING ARRANGEMENT
ENSEMBLE PALIER

(30) Priorität: 02.12.2009 DE 102009056526
(43) Veröffentlichungstag der Anmeldung: 10.10.2012
(73) Patentinhaber: Aktiebolaget SKF, 415 50 Göteborg (SE)
(72) Erfinder: BITZL, Jürgen, 97493 Bergrheinfeld (DE); BUCHHEIM, Burkhard, 97422 Schweinfurt (DE); DILJE, Alexander, 97422 Schweinfurt (DE); HAUCK, Helmut, 97502 Euerbach (DE); SEUFERT, Stefanie, 97711 Rothhausen (DE)
(74) Vertreter: Schonecke, Mitja
(86) Internationale Anmeldenummer: PCT/EP2010/068168
(87) Internationale Veröffentlichungsnummer: WO 2011/067152

(56) Entgegenhaltungen:
- EP-A1- 2 006 561
- EP-A2- 2 009 302
- WO-A1-2011/004760
- CH-A- 426 387
- DE-A1- 1 525 320
- DE-C- 676 233
- FR-A1- 2 468 783
- JP-A- 2003 194 080

## Beschreibung

Die Erfindung betrifft eine Lageranordnung, umfassend einen Lagerträger mit mindestens einer Aufnahme für mindestens einen Außenring eines Lagers und mindestens ein Lager, wobei der Außenring des Lagers mindestens eine Ringnut aufweist, in die zwecks axialer Fixierung des Außenrings relativ zum Lagerträger ein Sprengring eingesetzt ist, wobei am oder im Lagerträger mindestens ein Ausrichtelement angeordnet ist, mit dem der Sprengring relativ zum Lagerträger in einer vorgegebenen Winkellage hinsichtlich der Drehachse des Lagers gehalten wird.

Lageranordnungen dieser Art sind im Stand der Technik hinlänglich bekannt. Sie dienen insbesondere dazu, die Lagerung für zwei radial relativ eng beabstandete, parallel zueinander verlaufende Getriebewellen in einem Getriebegehäuse zu realisieren. Hierfür ist zumeist ein Trägerblech mit zwei Aufnahmen, z. B. kreisförmigen Ausschnitten, für die Lageraußenringe versehen; die Lageraußenringe und somit die Lager werden dann beispielsweise mittels Sprengringen, die in Umfangs-Ringnuten in den Lageraußenringen eingreifen, relativ zum Lagerträger fixiert. So entsteht eine Einheit, die in einfacher Weise in das Getriebegehäuse montiert werden kann. Der Lagerträger muss dabei im späteren Betrieb nicht zwingend Lagerkräfte übertragen; er kann auch als reine Halterung für die Lager dienen, bis diese im Gehäuse und namentlich in entsprechenden Gehäusebohrungen festgelegt sind. Es ist aber auch möglich, dass der Lagerträger so konzipiert ist, dass er Lagerkräfte im Betrieb der Lager aufnehmen und übertragen kann.

Eine gattungsgemäße Lageranordnung zeigt die EP 2 009 302 A2. Andere Lösungen für Lagerträger sind in der DE 676 233 C, in der EP 2 006 561 A1, in der JP 2003 194080A, in der FR 2 468 783 A und in der CH 426 387 A offenbart.

Bei der Halterung von Lagern im Lagerträger mittels Sprengringen wird es mitunter als nachteilig empfunden - beispielsweise unter dem Gesichtspunkt der Geräuschentwicklung -, dass die Sprengringe in Umfangsrichtung eine gewisse Beweglichkeit haben und sich um die Drehachse des Lagers in ihrer Ringnut drehen können. Dies ist insbesondere dann der Fall, wenn der Umfangswinkel, über den sich die Sprengringe erstrecken, wesentlich weniger als 360° ist (z. B. 330°), was erforderlich werden kann, wenn zwei zu lagernde Lager radial nahe aneinander heranrücken. Dann muss unter Umständen der Bereich, in dem die beiden Lager nahe aneinander heran rücken, von den Sprengringen frei bleiben. Eine Bewegung der Sprengringe in ihren Ringnuten kann unter diesen Umständen nicht sicher ausgeschlossen werden.

Der Erfindung liegt die **Aufgabe** zugrunde, eine Lageranordnung der gattungsgemäßen Art vorzuschlagen, bei der sichergestellt ist, dass im Betrieb der Lageranordnung eine unerwünschte Beweglichkeit der Sprengringe in ihren Ringnuten der Lagerringe zuverlässig verhindert wird, wobei dies durch einfache und kostengünstig umsetzbare Mittel bewerkstelligt werden soll.

Die **Lösung** dieser Aufgabe durch die Erfindung ist dadurch gekennzeichnet, dass der Lagerträger zwei benachbarte Aufnahmen für zwei Lager aufweist, wobei das Ausrichtelement durch zwei Erhebungen ausgebildet wird, die auf der Oberfläche des Lagerträgers angeordnet sind und die für beide Umfangsenden der Sprengringe zweier benachbarter Außenringe Anschläge bilden und wobei die Erhebungen als Noppen ausgebildet sind.

Möglich ist es, dass die beiden Erhebungen voneinander beabstandet im Bereich eines Verbindungssteges zwischen den beiden Aufnahmen auf der Oberfläche des Lagerträgers angeordnet sind.

Am Lagerträger können Haltelaschen angeordnet sein, die den Sprengring umgreifend biegbar sind, wobei die Haltelaschen insbesondere vom Ausrichtelement beanstandet angeordnet sind. So kann eine verliersichere und stabile Einheit hergestellt werden.

Der Sprengring erstreckt sich bevorzugt über einen Umfangswinkel zwischen 320° und 340°. Damit kann einerseits eine sichere Halterung des Lagers am Lagerträger sichergestellt werden, andererseits sind die Sprengringe nicht im Wege, um die beiden benachbarten Lager nahe aneinander heran zu rücken.

Der Lagerträger besteht bevorzugt aus Blech oder aus Kunststoff.

Mit der vorgeschlagenen Ausgestaltung wird es möglich, eine zuverlässige Verdrehsicherung für den Sprengring in seiner Ringnut zu schaffen, wobei es um eine Verdrehung um die Drehachse des Lagers geht.

In der Zeichnung sind Ausführungsbeispiele der Erfindung dargestellt, wobei nicht alle Figuren erfindungsgemäße Lösungen zeigen. Es zeigen:
- Fig. 1: einen Ausschnitt aus einem Getriebegehäuse im Radialschnitt, wobei ein Lagerträger samt zweier Wälzlager dargestellt ist,
- Fig. 2: in Explosionsdarstellung den Lagerträger samt zweier Lager gemäß der Anordnung nach Fig. 1 nach einer ersten Ausführungsform der Erfindung,
- Fig. 3: eine vergrößerte Darstellung eines Abschnitts des Lagerträgers nach der ersten Ausführungsform der Erfindung,
- Fig. 4: in perspektivischer Darstellung den Lagerträger samt der beiden Lager in fertig montiertem Status nach der ersten Ausführungsform der Erfindung,
- Fig. 5: in Explosionsdarstellung den Lagerträger samt zweier Lager gemäß der Anordnung nach Fig. 1 nach einer zweiten Ausführungsform,
- Fig: 6: eine vergrößerte Darstellung eines Abschnitts des Lagerträgers nach der zweiten Ausführungsform,
- Fig. 7: in perspektivischer Darstellung den Lagerträger samt der beiden Lager in fertig montiertem Status nach der zweiten Ausführungsform,
- Fig. 8: eine vergrößerte Darstellung eines Abschnitts des Lagerträgers nach Fig. 7,
- Fig. 9: in perspektivischer Darstellung den Lagerträger samt der beiden Lager in fast fertig montiertem Status nach einer dritten Ausführungsform, wobei ein Ausrichtelement noch nicht am Lagerträger angeordnet ist,
- Fig. 10: in perspektivischer Darstellung das Ausrichtelement gemäß Fig. 9, mit der Unterseite nach oben gedreht,
- Fig. 11: in Explosionsdarstellung den Lagerträger samt zweier Lager gemäß der Anordnung nach Fig. 1 nach einer vierten Ausführungsform,
- Fig. 12: in perspektivischer Darstellung den Lagerträger samt der beiden Lager in fertig montiertem Status nach der vierten Ausführungsform,
- Fig. 13: in perspektivischer Darstellung den Lagerträger gemäß Fig. 12, aus etwas anderer Ansicht betrachtet,
- Fig. 14: in perspektivischer Darstellung den Lagerträger samt der beiden Lager in fertig montiertem Status nach einer fünften Ausführungsform,
- Fig. 15: in perspektivischer Darstellung ein Lager gemäß der Anordnung nach Fig. 1,
- Fig. 16: in Explosionsdarstellung den Lagerträger samt zweier Lager gemäß der Anordnung nach Fig. 1 nach einer sechsten Ausführungsform,
- Fig. 17: in perspektivischer Darstellung den Lagerträger samt der beiden Lager in fertig montiertem Status nach der sechsten Ausführungsform,
- Fig. 18: in Explosionsdarstellung den Lagerträger samt zweier Lager gemäß der Anordnung nach Fig. 1 nach einer siebten Ausführungsform und
- Fig. 19: in perspektivischer Darstellung den Lagerträger samt der beiden Lager in fertig montiertem Status nach der siebten Ausführungsform.

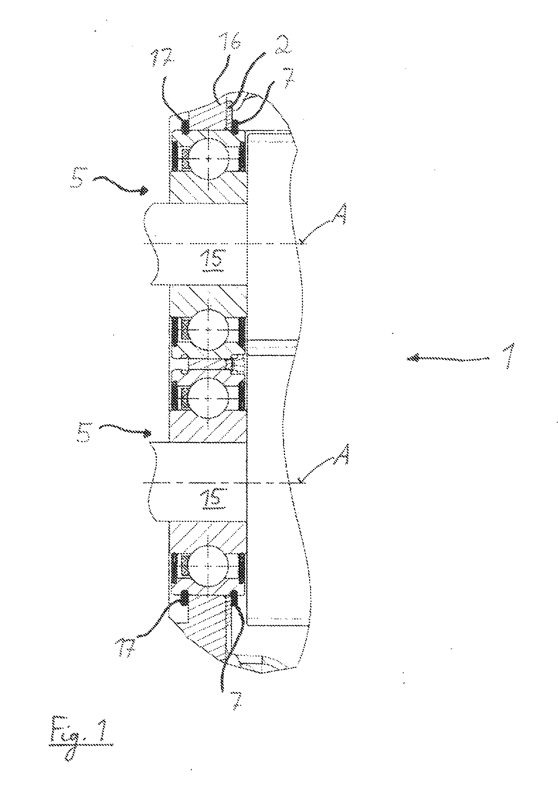

In Figur 1 ist eine Lageranordnung 1 zu sehen, die zwei Lager 5 umfasst, die beispielsweise zum Lagern zweier Wellen 15 in einem Getriebe eines Kraftfahrzeugs verwendet werden. Die Drehachse der Lager 5 ist mit A eingetragen. Eine Sicherung der Lager 5 im Gehäuse 16 des Getriebes erfolgt durch eine beidseitige Fixierung der Lager 5 durch Sprengringe 7 und 17. Durch den geringen Achsabstand zwischen den Lagern 5 sind die Sprengringe 7 und 17 so ausgeformt, dass sie einen breiten Öffnungswinkel aufweisen, also über ein vergleichsweise großes Bogenstück gesprengt sind; d. h. die Sprengringe 7, 17 erstrecken sich um einen Umfangsbereich von deutlich weniger als 360°, z. B. um 330°. Je nach Montageprozess ist es gegebenenfalls erforderlich, dass die Lager 5 in einem Zusatzelement in Form eines Lagerträgers 2, beispielsweise aus Blech, vor der Montage in das Gehäuse 16 vormontiert sind. In diesem Fall ist es sinnvoll, die Lager 5 im Lagerträger 2 verliersicher vorzumontieren. Dann muss der Lagerträger 2 mit den daran gehalterten Lagern 5 bei der Montage des Getriebes nur noch an der entsprechende Stelle des Gehäuses 16 eingesetzt werden, wodurch die Lager 5 direkt in vorgesehene Lagerbohrungen (Halterungsöffnungen) im Gehäuse 16 positioniert werden. Dies erleichtert den eigentlichen Montageprozess des Getriebes wesentlich.

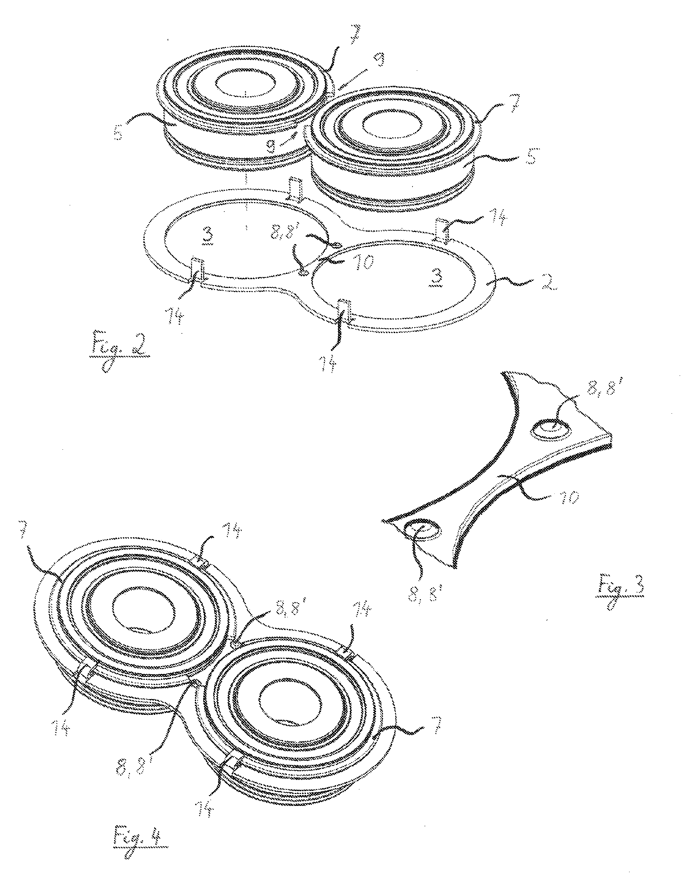

Die in Figur 2 in demontiertem Zustand gezeigte Lageranordnung umfasst einen Lagerträger 2 (Halter) für die Lager 5, wobei Zusatzelemente in Form von Ausrichtelementen 8, beispielsweise aus Blech oder Kunststoff, vorgesehen sind, die auf dem Verbindungssteg 10 zwischen den beiden Aufnahmen 3 angeordnet sind. Der Steg 10 weist also Erhebungen (Ausformungen) 8 in Form zweier Noppen 8' auf. Figur 3 zeigt eine ausschnittsweise Vergrößenmg des Stegs 10 und der Noppen 8'.

Die Außenringe 4 der Lager 5 weisen radial umlaufende Ringnuten zum Aufnehmen der Sprengringe 7, 17 auf. Aufgrund der geringen Beabstandung der Lager 5 im Lagerträger 2 sind die Sprengringe 7, 17, wie bereits erwähnt, nicht vollständig radial umlaufend ausgebildet. Zwei Sprengringe 7 sind bereits an den Lagern 5 vor der Montage im Lagerträger 2 vorgesehen, um die Lager 5 im Lagerträger 2 zu fixieren. Der Lagerträger 2 weist dazu am Umfang angebrachte Haltelaschen 14 auf. Nach dem orientierten Einlegen der Lager 5 mit vormontierten Sprengringen 7 in den Lagerträger 2 werden die Laschen 14 über den Sprengringen 7 umgelegt, was in Figur 4 dargestellt ist. Dadurch ist ein verliersicherer Transport bis zur Montage der Lageranordnung in das Getriebegehäuse gewährleistet. Die Noppen 8' in der Mitte des Lagerträgers 2, die sich jetzt im Bereich der Sprengringöffnungen befinden, vermeiden das Verdrehen der Sprengringe 7. Die bilden also für die Umfangsenden 9 der Sprengringe 7 einen Anschlag.

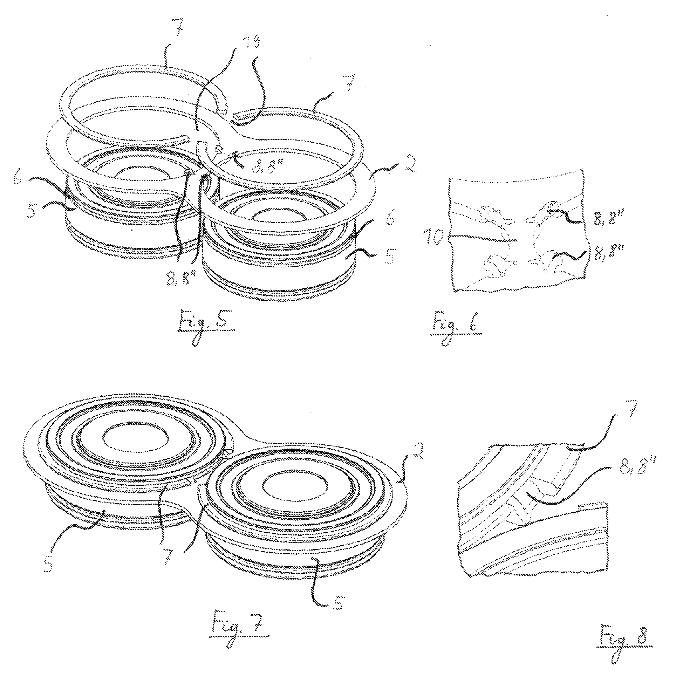

Eine nicht erfindungsgemäße alternative Lösung ist in den Figuren 5 bis 8 dargestellt. Dabei sind am Steg 10 des Lagerträgers 2 Ausrichtelemente 8 in Form von Vorsprüngen 8" angeformt, die elastische Schnappelemente bilden. In Figur 6 ist eine ausschnittsweise Vergrößerung dargestellt. Zur Montage werden die Lager 5 von unten in den Lagerträger 2 geschoben, wobei die Sprengringe 7 noch nicht montiert sind. Beim Aufschieben des Lagerträgers 2 über die Lager 5 schnappen die Vorsprünge 8" in die Ringnuten 6 für die Sprengringe 7 in den Lagern 5 ein. Die Sprengringe 7 werden orientiert über die Lager 5 aufgeschnappt, und zwar derart, dass sich die Vorsprünge 8" jeweils innerhalb der Sprengringöffnungen 19 befinden, wodurch analog zur Funktion der Noppen 8' in Figur 2 die Verdrehung der Sprengringe 7 verhindert wird. Die Lager 5 sind am Lagerträger 2 unverlierbar eingerastet, wie in den Figuren 7 und 8 dargestellt ist.

Da die Lager 5 nur durch die Rastnasen 8" (Schnappelemente) gesichert sind, kann es in dieser Ausführungsform zu einem leichten Verkippen der Lager 5 kommen. Soll dies verhindert werden, kann gegenüber des Stegs 10 oder in einem anderen Bereich der Sprengringe 7 am Lagerträger 2 eine umbiegbare Lasche analog zur Ausführungsform gemäß den Figuren 2 bis 4 angebracht sein, so dass die Lager 5 fest am Lagerträger 2 gesichert sind.

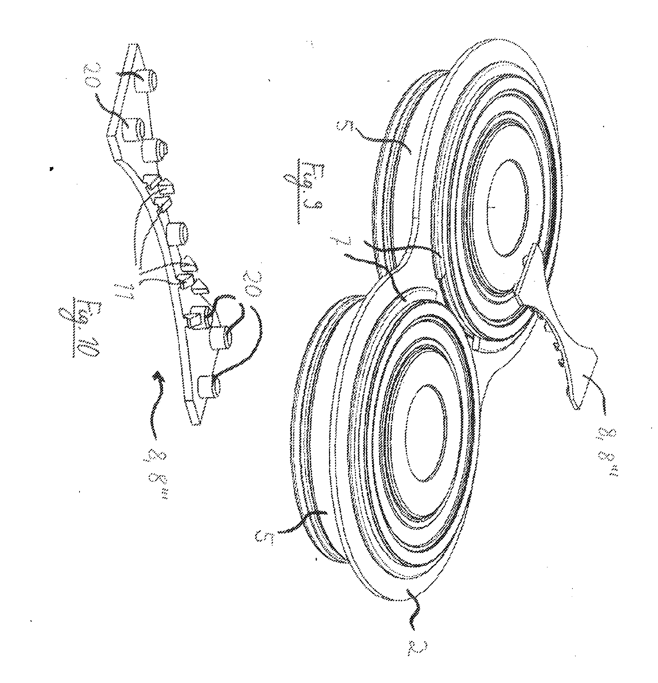

In Figur 9 ist ein weiteres alternatives Ausführungsbeispiel dargestellt, bei dem ein Ausrichtelement 8 in Form eines Bauteil 8'" (Halteelement) als Aufsatzteil zwischen die Lager 5 eingebracht wird. Das Bauteil 8'" ist in Figur 10 im Detail dargestellt (mit seiner Unterseite nach oben zu sehen). Der Lagerträger 2 für die Lager 5 ist hier ein einfaches Blech- oder Kunststoffteil mit zwei Öffnungen. Das Bauteil 8'" weist unterseitig Noppen 20 auf, die einen definierten Abstand zur Oberfläche des Lagerträgers 2 gewährleisten. Zur Halterung weist das Bauteil 8"' hakenförmige Vorsprünge 11 (Schnappelemente) auf, die in die Sprengringnuten der Außenringe der beiden Lager 5 einschnappen und so das Bauteil 8'" an der Lageranordnung fixieren. Somit wird ein Verdrehen der Sprengringe 7 verhindert.

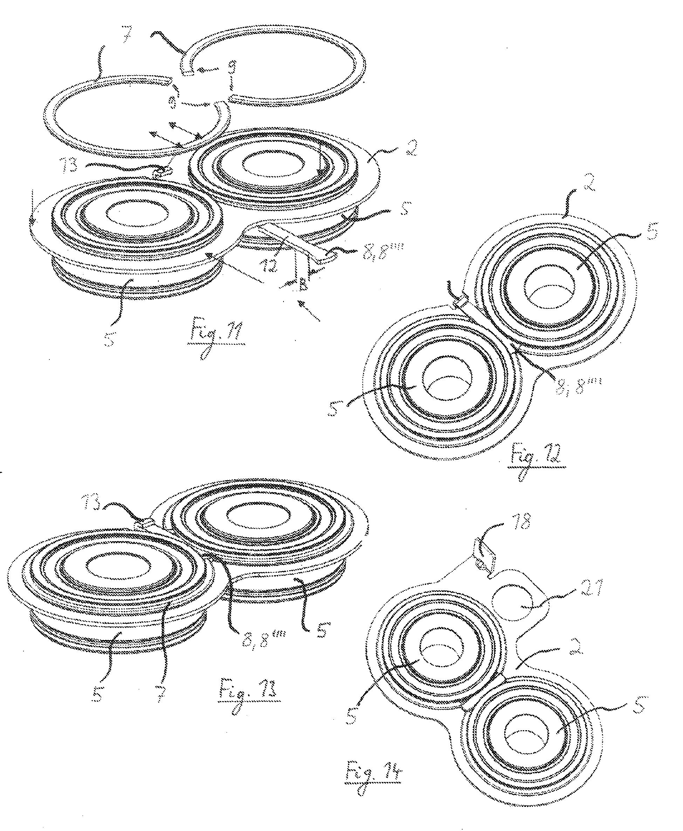

In den Figuren 11 bis 14 ist ein weiteres nicht erfindungsgemäßes Ausführungsbeispiel dargestellt. Hier ist ein Ausrichtelement 8 in Form eines Bauteils 8"" - ausgebildet als Schieber - zwischen den Lagern 5 vorgesehen. Figur 11 zeigt einen teilweise montierten Zustand mit Pfeilen, die den Montageprozess verdeutlichen. Die Figuren 12 und 13 zeigen verschiedene Ansichten der fertig vormontierten Lageranordnung.

Das Bauteil 8"" ist der Rundung der Lager 5 wenigstens teilweise nachgeformt, wobei der minimale Abstand der Lager 5 berücksichtigt wird. Es wird zwischen die Lager 5 eingeschoben und greift in die Sprengringnuten an den Außenringen der Lager 5 ein. Aufgrund der Form des Bauteils 8"" (als flaches Blech mit der Breite B in einem Abschnitt 12, das sichendseitig verbreitert) ist es zwischen den Lagern 5 nicht vollständig durchschiebbar. Ein Befestigungselement 13 in Form eines Halters weist eine umgebogene Lasche auf, in die das Bauteil 8"" eingeschoben und gehaltert wird.

Durch anschließende orientierte Montage der Sprengringe 7 sind die Teile unverlierbar verbunden. Die Sprengringe 7 werden zur Montage leicht geweitet und in die Sprengringnuten der Außenringe der Lager 5 eingelegt. Dabei liegen die Öffnungen der Sprengringe 7 genau im Bereich des Bauteils 8"" und sind somit verdrehsicher gehaltert, d. h. das Bauteil 8"" bildet - wie auch bei den vorstehend beschriebenen Ausführungsbeispielen - einen Anschlag für die Umfangsenden 9 der Sprengringe 7.

In Figur 14 ist eine Erweiterung des Ausführungsbeispiels der Figuren 11 bis 13 gezeigt. Hier weist der Lagerträger 2 neben der Haltefunktion für die Lager 5 noch eine abgewinkelte Lasche 18 und eine Öffnung 21 auf, die nach Einbau im Getriebe Funktionen erfüllen können, wie dies bei bekannten Lagerträgern der Fall ist. Entsprechende Funktionselemente können auch bei den anderen Ausführungsbeispielen vorgesehen sein.

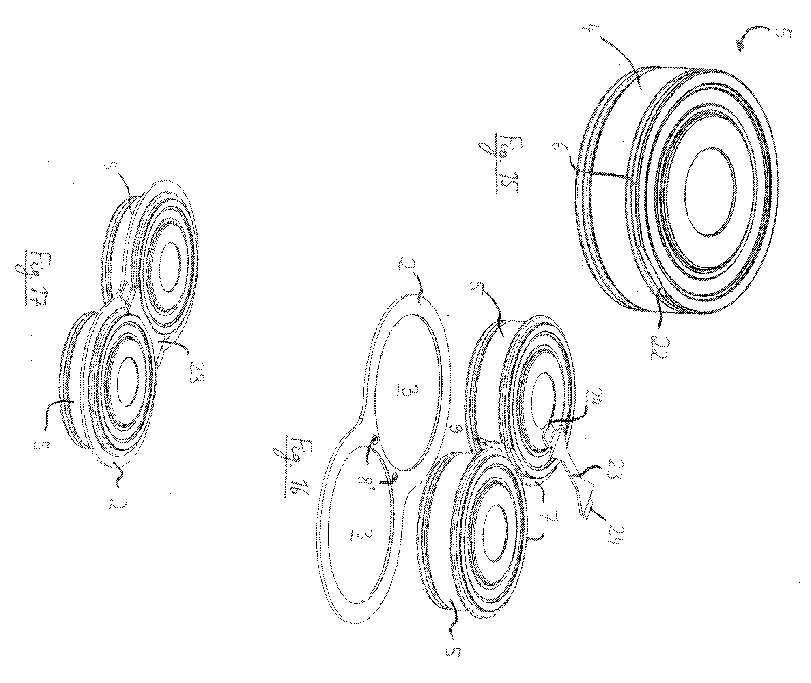

Eine nicht erfindungsgemäße Zusatzfunktionalität ist in den Figuren 15 bis 19 dargestellt:
In Figur 15 ist ein Lager 5 dargestellt. Der Lageraußenring 4 ist auf einer Seite, d. h. an einer Umfangsstelle, oberhalb der Ringnut 6 für den Sprengring 7 abgeflacht, d. h. hier ist eine Ausnehmung 22 eingebracht (z. B. eingefräst). Zwei Lager 5 können, wie es in Figur 16 dargestellt und bereits oben beschrieben ist, in den Lagerträger 2 (Halter) eingebracht werden. Hierzu hat der Lagerträger 2 zwei Aufnahmen 3 für je einen Lageraußenring 4; die Aufnahmen 3 bestehen vorliegend aus einer kreisförmigen Bohning (Ausstanzung) im Blech des Lagerträgers 2.

Der Lagerträger 2 weist wiedenun die Erhebungen 8' in Form der Noppen auf, die so angeordnet sind, dass sie - wie erläutert - in Umfangsrichtung einen Anschlag für das Umfangsende 9 der Sprengringe 7 bilden und so ein Verdrehen der Sprengringe 7 verhindern.

Bei der Montage werden die Lager 5 orientiert in den Lagerträger 2 eingelegt. Dabei können die Sprengringe 7 bereits vormontiert sein. Zur Verhinderung der Verdrehung der Lager 5 wird ein Eingriffselement 23 (Zusatzelement), vorzugsweise aus Blech oder Kunststoff, im Bereich der Sprengringöffiungen zwischen den abgeflachten Außenringen positioniert. Das Eingriffselement 23 ist den Konturen der Außenringen im Bereich der Ausnehmung 22 wenigstens teilweise nachgeformt und im mittleren Bereich vorzugsweise gerade ausgebildet. Hier hat das Eingriffselement 23 also Anlageflächen, die kongruent sind zur Form der Ausnehmungen 22 der Außenringe 4.

Das Eingriffselement 23 weist endseitig Befestigungsmittel 24 in Form verformbarer Haltenasen auf, die in entsprechenden Haltelaschen am Lagerträger 2 durch Umbiegen gehaltert werden können (was nicht dargestellt ist). Figur 17 zeigt die vormontierte Lageranordnung, bereit, um in das Gehäuse eingebaut werden zu können.

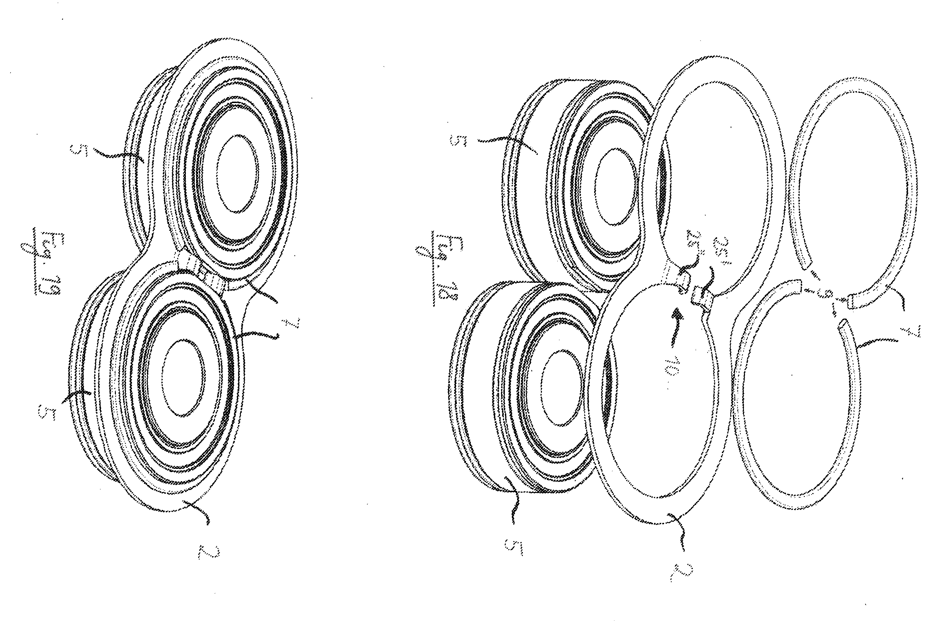

In den Figuren 18 und 19 ist eine nicht erfindungsgemäße alternative Ausführungsform dargestellt. Hier ist der sich infolge der Aufnahmen 3 ergebender Steg 10 des Lagerträgers 2 gesprengt (d. h. geteilt) ausgeführt, wodurch zwei laschenartige Teilelemente 25' und 25" entstehen. Die Teilelemente 25', 25"sind aus der Ebene des Lagerträgers 2 leicht heraus gebogen. Sie sind jeweils so gebogen, dass ein hakenförmiger Endbereich entsteht. Die Teilelemente 25', 25" sind derart dimensioniert, dass sie bei montierten Lagern 5 in die Ausnehmungen 22 der Außenringe 4 greifen und so ein Verdrehen der Außenringe 4 relativ zum Lagerträger 2 verhindern, und zwar um die Drehachse A der Lager 5. Da sich die Teilelemente 25', 25" kontinuierlich aus dem Lagerträger 2 erheben, verhindern sie zusätzlich auch das Verdrehen der Sprengringe 7 und haben mithin die Funktionalität der oben diskutierten Ausrichtelemente 8.

Durch die Sprengringe 7 ist eine verliersichere Halterung der Lager 5 am Lagerträger 2 gegeben. Für diese, zusätzlich zur Verdrehsicherung der Sprengringe und zur Verdrehsicherung der Lageraußenringe wünschenswerte Funktionalität sind die obigen Ausführungen der Erfindung erläutert.

Dabei ist es möglich, die Verdrehsicherung der Sprengringe mit der Verdrehsicherung der Lagerringe zu kombinieren oder auch isoliert zu verwirklichen. Die Verdrehsicherung der Lageraußenringe und die Verdrehsicherung der Sprengringe sowie die verliersichere Halterung der Sprengringe kann also in vorteilhafter Weise kombiniert werden, so dass mit vergleichsweise geringem Fertigungsaufwand alle genannten Anforderungen erfüllt werden können. Allerdings ist es ebenfalls möglich, Lageranordnungen anzugeben, die durch den entsprechend ausgebildeten Lagerträger nur eine der Fulktionalitäten, also Verliersicherung bzw. Verdrehsicherung der Lager 5 bzw. der Sprengringe 7, aufweisen.

### Bezugszeichenliste

- 1: Lageranordnung
- 2: Lagerträger
- 3: Aufnahme
- 4: Außenring
- 5: Lager
- 6: Ringnut
- 7: Sprengring
- 8: Ausrichtelement
- 8': Erhebung (Noppen)
- 8'': Versprung (Rastnase)
- 8'": Bauteil (Aufsatzteil)
- 8"": Bauteil (Schieber)
- 9: Umfangsende
- 10: Verbindungssteg
- 11: hakenförmiger Vorsprung
- 12: Abschnitt des Bauteils 8""
- 13: Befestigungselement
- 14: Haltelasche
- 15: Welle
- 16: Gehäuse
- 17: Sprengring
- 18: Lasche
- 19: Sprengringöffnung
- 20: Noppen
- 21: Öffnung
- 22: Ausnehmung
- 23: Eingriffselement
- 24: Befestigungsmittel
- 25': laschenartiges Teilelement
- 25": laschenartiges Teilelement

- A: Drehachse
- B: Breite

## Patentansprüche

1. Lageranordnung (1), umfassend einen Lagerträger (2) mit mindestens einer Aufnahme (3) für mindestens einen Außenring (4) eines Lagers (5) und mindestens ein Lager (5), wobei der Außenring (4) des Lagers (5) mindestens eine Ringnut (6) aufweist, in die zwecks axialer Fixierung des Außenrings (4) relativ zum Lagerträger (2) ein Sprengring (7) eingesetzt ist, wobei am oder im Lagerträger (2) mindestens ein Ausrichtelement (8) angeordnet ist, mit dem der Sprengring (7) relativ zum Lagerträger (2) in einer vorgegebenen Winkellage hinsichtlich der Drehachse (A) des Lagers (5) gehalten wird, wobei der Lagerträger (2) zwei benachbarte Aufnahmen (3) für zwei Lager (5) aufweist,
**dadurch gekennzeichnet, dass**
das Ausrichtelement (8) durch zwei Erhebungen (8') ausgebildet wird, die auf der Oberfläche des Lagerträgers (2) angeordnet sind und die für beide Umfangsenden (9) der Sprengringe (7) zweier benachbarter Außenringe (4) Anschläge bilden und wobei die Erhebungen (8') als Noppen ausgebildet sind.

2. Lageranordnung nach Anspruch 1, **dadurch gekennzeichnet, dass** die beiden Erhebungen (8') voneinander beabstandet im Bereich eines Verbindungssteges (10) zwischen den beiden Aufnahmen (3) auf der Oberfläche des Lagerträgers (2) angeordnet sind.

3. Lageranordnung nach Anspruch 1 oder 2, **dadurch gekennzeichnet, dass** am Lagerträger (2) Haltelaschen (14) angeordnet sind, die den Sprengring (7) umgreifend biegbar sind, wobei die Haltelaschen (14) insbesondere vom Ausrichtelement (8) beanstandet angeordnet sind.

4. Lageranordnung nach einem der Ansprüche 1 bis 3, **dadurch gekennzeichnet, dass** sich der Sprengring (7) über einen Umfangswinkel zwischen 320° und 340° erstreckt.

5. Lageranordnung nach einem der Absprüche 1 bis 4, **dadurch gekennzeichnet, dass** der Lagerträger (2) aus Blech oder aus Kunststoff besteht.

## Claims

1. Bearing arrangement (1), comprising a bearing carrier (2), with at least one seat (3) for at least one outer ring (4) of a bearing (5), and at least one bearing (5), the outer ring (4) of the bearing (5) having at least one annular groove (6), into which a circlip (7) is inserted for the purpose of axial fixing of the outer ring (4) relative to the bearing carrier (2), at least one orienting element (8) being arranged on the or in the bearing carrier (2), by way of which orienting element (8) the circlip (7) is held relative to the bearing carrier (2) in a predefined angular position with regard to the rotational axis (A) of the bearing (5), the bearing carrier (2) having two adjacent seats (3) for two bearings (5), **characterized in that** the orienting element (8) is formed by two elevations (8') which are arranged on the surface of the bearing carrier (2) and form stops for both circumferential ends (9) of the circlip (7) of two adjacent outer rings (4), the elevations (8') being configured as bumps.

2. Bearing arrangement according to Claim 1, **characterized in that** the two elevations (8') are arranged spaced apart from one another in the region of a connecting web (10) between the two seats (3) on the surface of the bearing carrier (2).

3. Bearing arrangement according to Claim 1 or 2, **characterized in that** holding lugs (14) which can be bent so as to engage around the circlip (7) are arranged on the bearing carrier (2), the holding lugs (14) being arranged, in particular, so as to be spaced apart from the orienting element (8).

4. Bearing arrangement according to one of Claims 1 to 3, **characterized in that** the circlip (7) extends over a circumferential angle between 320° and 340°.

5. Bearing arrangement according to one of Claims 1 to 4, **characterized in that** the bearing carrier (2) is composed of sheet metal or of plastic.

## Revendications

1. Ensemble palier (1), comprenant un support de palier (2) avec au moins un logement (3) pour au moins une bague extérieure (4) d'un palier (5) et au moins un palier (5), la bague extérieure (4) du palier (5) présentant au moins une rainure annulaire (6) dans laquelle est inséré un jonc (7) dans le but de réaliser la fixation axiale de la bague extérieure (4) par rapport au support de palier (2), au moins un élément d'alignement (8) étant disposé sur ou dans le support de palier (2), avec lequel élément d'alignement le jonc (7) est maintenu par rapport au support de palier (2) suivant une position angulaire prédéfinie par rapport à l'axe de rotation (A) du palier (5),
le support de palier (2) présentant deux logements adjacents (3) pour deux paliers (5),
**caractérisé en ce que**
l'élément d'alignement (8) est réalisé par deux rehaussements (8'), lesquels sont disposés sur la surface du support de palier (2) et forment des butées pour les deux extrémités périphériques (9) des joncs (7) de deux bagues extérieures adjacentes (4), les rehaussements (8') étant réalisés sous forme de protubérances.

2. Ensemble palier selon la revendication 1, **caractérisé en ce que** les deux rehaussements (8') sont disposés à distance l'un de l'autre dans la région d'une nervure de liaison (10) entre les deux logements (3) sur la surface du support de palier (2).

3. Ensemble palier selon la revendication 1 ou 2, **caractérisé en ce que** des pattes de fixation (14) sont disposées sur le support de palier (2), lesquelles pattes de fixation peuvent être fléchies en s'engageant autour du jonc (7), les pattes de fixation (14) étant notamment disposées à distance de l'élément d'alignement (8).

4. Ensemble palier selon l'une quelconque des revendications 1 à 3, **caractérisé en ce que** le jonc (7) s'étend sur un angle périphérique compris entre 320° et 340°.

5. Ensemble palier selon l'une quelconque des revendications 1 à 4, **caractérisé en ce que** le support de palier (2) se compose de tôle ou de plastique.
